# EUROPÄISCHE PATENTSCHRIFT

(11) **EP 1 048 812 B1**
(45) Veröffentlichungstag und Bekanntmachung des Hinweises auf die Patenterteilung: **08.12.2004**
(21) Anmeldenummer: 00250095.7
(22) Anmeldetag: 17.03.2000
(51) Int. Cl.: E05F 15/00

(54) **Verfahren zum Normieren der Scheibenposition eines fremdkraftbetätigten Kraftfahrzeugfensterhebers**
Method to normalize the position of the window pane of an externally powered vehicle window regulator
Méthode pour normaliser la position de la vitre d'un lève-vitre de véhicule actionné par une force exterieure

(30) Priorität: 30.04.1999 DE 19921092
(43) Veröffentlichungstag der Anmeldung: 02.11.2000
(73) Patentinhaber: Brose Fahrzeugteile GmbH & Co. KG, Coburg, 96450 Coburg (DE)
(72) Erfinder: Wagner, Klaus, 96160 Untermerzbach (DE); Giersch, Michael, 95131 Schwarzbach am Wald (DE)
(74) Vertreter: Baumgärtel, Gunnar, Dr.

(56) Entgegenhaltungen:
- DE-C- 19 628 203
- DE-C- 19 632 910
- US-A- 4 468 596

## Beschreibung

Die Erfindung betrifft ein Verfahren zum Normieren der Scheibenposition eines fremdkraftbetätigten Kraftfahrzeugfensterhebers nach dem Oberbegriff des Patentanspruchs 1.

Die Normierung der Scheibenposition ist von besonderer Bedeutung bei Kraftfahrzeugfensterhebern, die mit einer Einrichtung zur Erkennung eines Einklemmfalles ausgerüstet sind. Bei solchen Fensterhebern wird der Antrieb automatisch abgeschaltet und gegebenenfalls reversiert, wenn die Fensterscheibe beim Anheben auf ein Hindernis trifft, das zwischen der Scheibenoberkante und dem Rahmen der Fensterscheibe eingeklemmt würde.

Hierbei besteht jedoch das Problem, daß das Einfahren der Fensterscheibe in die obere Scheibendichtung wegen des von der Scheibendichtung gegen die Verstellbewegung der Fensterscheibe ausgeübten Widerstandes als Einklemmfall interpretiert werden könnte. Der Fensterheber würde dann automatisch abgeschaltet und die Fensterscheibe könnte nicht vollständig in die obere Scheibendichtung eingefahren werden. Zur Lösung dieses Problems sind verschiedene Vorschläge unterbreitet worden, um den Einklemmschutz beim Einlaufen der Fensterscheibe in die obere Scheibendichtung zu deaktivieren, vergl. DE 196 28 203 C1. Hierzu ist es aber erforderlich, während der Verstellbewegung einer Fensterscheibe die jeweilige Position der Fensterscheibe genau bestimmen zu können.

Aus diesen Gründen ist es üblich, vor der Inbetriebnahme eines fremdkraftbetätigten Fensterhebers oder auch nach dessen Reparatur die Fensterscheibe zur Normierung der Scheibenposition einmal in ihre Schließposition zu verfahren. Diese obere Endposition der Fensterscheibe dient dann im weiteren als Null- bzw. Referenzlage der Fensterscheibe, relativ zu der die einzelnen Verstellpositionen der Fensterscheibe entlang ihres Verstellweges bestimmt werden können.

Aufgrund der Bedeutung der Normierung der Scheibenposition für ein einwandfreies Funktionieren eines Einklemmschutzsystems und darüber hinaus allgemein für ein zuverlässiges Erfassen der aktuellen Position einer verstellbaren Fensterscheibe müssen Fehler bei der Normierung der Scheibenposition möglichst zuverlässig ausgeschlossen werden. Denn Fehler bei der Normierung der Scheibenposition können z.B. dazu führen, daß ein beim Anheben der Fensterscheibe auftretender Einklemmfall von dem Einklemmschutzsystem fehlerhaft als das Einfahren der Fensterscheibe in die obere Scheibendichtung interpretiert wird. Dies hätte zur Folge, daß der Antrieb des Fensterhebers nicht abgeschaltet, sondern vielmehr mit erhöhter Stromzufuhr weiterbetrieben wird, damit der Widerstand der vermeintlichen Scheibendichtung überwunden werden kann. Dies kann insbesondere im Fall eines eingeklemmten Körperteiles zu schweren Verletzungen führen.

Der Erfindung liegt daher die Aufgabe zugrunde, ein Verfahren zur Normierung der Scheibenposition eines Fensterhebers zu schaffen, bei dem eine fehlerhafte Normierung der Scheibenposition möglichst zuverlässig ausgeschlossen wird.

Dieses Problem wird erfindungsgemäß durch die Schaffung eines Verfahrens mit den Merkmalen des Patentanspruchs 1 gelöst.

Danach wird zur Prüfung, ob die Fensterscheibe beim Normieren ordnungsgemäß ihre obere Endposition (Schließposition) erreicht hat, die Änderung einer mit der Dynamik der Fensterscheibe korrelierten Größe beim Einlaufen der Fensterscheibe in den der Schließposition zugeordnete Dichtungsbereich ausgewertet.

Die Erfindung beruht auf der Erkenntnis, daß die Dynamik der Fensterscheibe beim Einlaufen in die der Schließposition zugeordnete Scheibendichtung auf eine charakteristische Weise beeinflußt wird. Daher kann unter Berücksichtigung der Dynamik der Fensterscheibe ohne weiteres überprüft werden, ob die Fensterscheibe tatsächlich ordnungsgemäß in den oberen Dichtungsbereich eingefahren ist. Insbesondere läßt sich zuverlässig feststellen, ob beim Normieren der Scheibenposition das Einfahren der Fensterscheibe in die Schließposition durch eine fehlerhafte Montage des Fensterhebers oder durch einen zwischen der Fensterscheibe und dem Dichtungsbereich eingeklemmten Gegenstand verhindert wird. In diesem Fall wird die beim Normieren der Scheibenposition erreichte Endposition als eine nicht der tatsächlichen Schließposition entsprechende Position erkannt und daher im folgenden nicht als Referenz- bzw. Nullpunktlage der Fensterscheibe herangezogen.

Die gescheiterte Normierung kann durch ein optisches oder akustisches Signal angezeigt werden. Ferner wird nach einer gescheiterten Normierung die Automatikfunktion des fremdkraftbetätigten Fensterhebers nicht aktiviert, das heißt solange keine ordnungsgemäße Normierung der Scheibenposition erfolgt ist, kann der Fensterheber nicht automatisch in seine obere Endposition verfahren werden.

Als mit der Dynamik der Fensterscheibe korrelierte Größen, die zur Prüfung, ob die Fensterscheibe ihre Endposition in dem oberen Dichtungsbereich erreicht hat, herangezogen werden können, kommen insbesondere die Periodendauer oder Geschwindigkeit des Antriebs (bzw. eines mit dem Antrieb verbundenen Verstellelementes, wie z.B. eines Getriebeteiles des Fensterhebers oder der Fensterscheibe selbst), die Stromaufnahme des Antriebs oder auch die Änderung der Geschwindigkeit (Beschleunigung) oder der Stromaufnahme in Betracht. Grundsätzlich kann bei der Durchführung des erfindungsgemäßen Verfahrens jede Größe herangezogen werden, die den Einfluß der oberen Scheibendichtung auf die Dynamik der Fensterscheibe widerspiegelt.

Der Einlauf der Fensterscheibe in den Dichtungsbereich kann insbesondere anhand eines lokalen Extremums der mit der Dynamik korrelierten Größe, vorzugsweise der Geschwindigkeit bzw. der Periodendauer, in Abhängigkeit von dem Verstellort der Fensterscheibe ermittelt werden. So kommt es beim Einlauf der Fensterscheibe in den Dichtungsbereich üblicherweise zunächst zu einem Abfall der Geschwindigkeit bzw. einer Erhöhung der Periodendauer des Antriebs. Nachdem die Fensterscheibe mit ihrer Oberkante aber ein Stück weit in den Dichtungsbereich eingedrungen ist und dabei den Widerstand der gegen die Fensterscheibe drückenden Dichtlippen des Dichtungsbereiches überwunden hat, erfolgt wieder eine gewisse Zunahme der Geschwindigkeit bzw. Abnahme der Periodendauer des Antriebs. Hierdurch bildet sich in dem Verlauf der Geschwindigkeit bzw. der Periodendauer des Antriebs über dem Verstellweg der Fensterscheibe ein lokales Minimum bzw. ein lokales Maximum aus. Dieses ist typisch für das Eindringen der Scheibenoberkante in den Dichtungsbereich und kann somit als ein typisches Kriterium für das Erreichen der Schließposition der Fensterscheibe herangezogen werden. Trifft demgegenüber die Fensterscheibe mit ihrer Oberkante beim Normieren auf ein Hindernis auf, so wird die Geschwindigkeit im wesentlichen kontinuierlich abnehmen bzw. die Periodendauer zunehmen. Zur Ausbildung eines lokalen Extremums kommt es hierbei nicht. Dadurch kann der Einlauf in den Dichtungsbereich eindeutig von dem Auftreffen auf ein sonstiges Hindernis unterschieden werden.

Bei der Auswertung der mit der Dynamik der Fensterscheibe korrelierten Größe sollten nicht nur die aktuelle Verstellposition der Fensterscheibe, sondern ggf. auch einige Vorwerte der mit der Dynamik der Fensterscheibe korrelierten Größe herangezogen werden. Dadurch wird verhindert, daß das Ergebnis der Auswertung durch Umwelteinflüsse, Abnutzung etc. verfälscht wird.

Bei einer bevorzugten Ausführungsform der Erfindung wird die Normierung der Scheibenposition abgebrochen, wenn nach einem vorgebbaren Zeitraum kein für den Einlauf der Fensterscheibe in den Dichtungsbereich charakteristischer Verlauf der mit der Dynamik der Fensterscheibe korrelierten Größe beobachtet worden ist. Denn dies deutet darauf hin, daß während der Normierung der Fensterscheibe keine ordnungsgemäße Verstellbewegung der Fensterscheibe stattfindet und somit eine zuverlässige Normierung der Scheibenposition nicht erfolgen kann.

Weiterhin wird die Normierung der Scheibenposition vorzugsweise nur dann durchgeführt, wenn sich die Fensterscheibe zumindest entlang einer Wegstrecke bewegt hat, die größer ist als die Ausdehnung der Scheibendichtung in Bewegungsrichtung der Fensterscheibe. Denn nur in einem solchen Fall ist sichergestellt, daß das beim Einlaufen der Oberkante der Fensterscheibe in den Dichtungsbereich auftretende charakteristische Verhalten der mit der Dynamik der Fensterscheibe korrelierten Größe tatsächlich beobachtet werden kann. Mit Vorteil wird dabei der minimale Verstellweg der Fensterscheibe noch etwas größer gewählt als die Ausdehnung des Dichtungsbereiches, um sicherzustellen, daß die Fensterscheibe beim Eindringen in den Dichtungsbereich bereits ihre übliche Verstellgeschwindigkeit erreicht hat (eingeschwungener Systemzustand).

Weitere Vorteile der Erfindung werden bei der nachfolgenden Beschreibung eines Ausführungsbeispiels anhand der Figuren deutlich werden.

Es zeigen:
- Fig. 1a -: eine zur Normierung der Scheibenposition in ihre obere Endposition (Schließposition) eingefahrene Fensterscheibe;
- Fig. 1b -: eine beim Normieren der Scheibenposition gegen ein Hindernis gefahrene Fensterscheibe;
- Fig. 2a -: die Oberkante einer Fensterscheibe beim Einfahren in den oberen Dichtungsbereich;
- Fig. 2b -: die Periodendauer des Verstellantriebs des Fensterhebers in Abhängigkeit vom Verstellort, insbesondere im Bereich der oberen Scheibendichtung;
- Fig. 3a -: das Auflaufen der Oberkante der Fensterscheibe gegen ein Hindernis während des Anhebens der Fensterscheibe zum Zwecke der Normierung der Scheibenposition;
- Fig. 3b -: den Verlauf der Periodendauer des Antriebs des Fensterhebers in Abhängigkeit von dem Verstellort, insbesondere beim Anfahren eines Hindernisses.

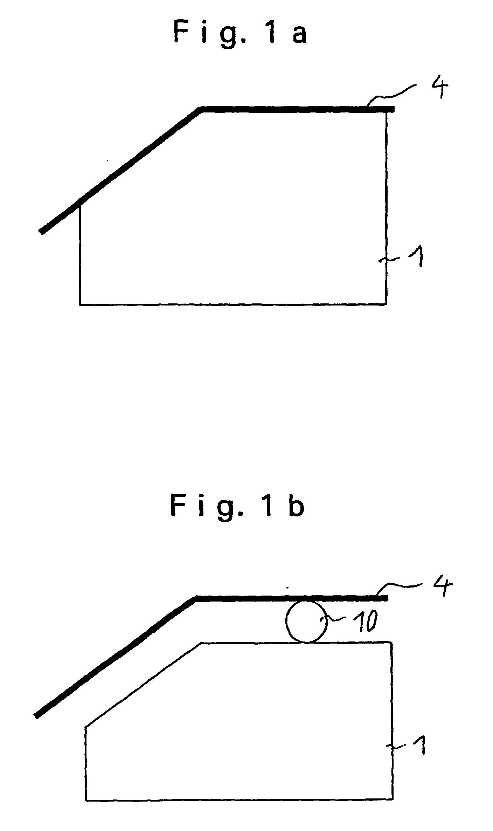

In Figur 1a ist eine mittels eines fremdkraftbetätigten Fensterhebers verstellbare Fensterscheibe 1 dargestellt, die zur Normierung der Scheibenposition mit ihrer Oberkante in einen Dichtungsbereich 4 in ihrer oberen Endposition (Schließposition) gefahren worden ist.

In Figur 1b ist dieselbe Fensterscheibe 1 dargestellt, die hier allerdings beim Anheben zum Zwecke der Normierung der Scheibenposition auf ein Hindernis 10 gefahren ist, das somit zwischen der Oberkante der Fensterscheibe 1 und dem oberen Dichtungsbereich 4 eingeklemmt worden ist.

Da das Einfahren der Fensterscheibe 1 in den oberen Dichtungsbereich 4 zum Zweck der Normierung der Scheibenposition dazu dient, eine Referenzlage der Fensterscheibe 1 festzulegen, auf die im weiteren Betrieb des Fensterhebers die jeweilige Verstellposition der Fensterscheibe 1 bezogen wird, kommt es bei dem Ausführungsbeispiel gemäß Figur 1b zu einer fehlerhaften Normierung der Scheibenposition. Denn die Steuer- bzw. Elektronikeinheit des der Verstellung der Fensterscheibe 1 dienenden Fensterhebers interpretiert die in Figur 1b dargestellte Position in fehlerhafter Weise als Schließposition der Fensterscheibe 1. Bei einem mit einem Einklemmschutzsystem versehenen Fensterheber bedeutet dies, daß im Automatikbetrieb des Fensterhebers beim Anheben der Fensterscheibe 1 das Einklemmschutzsystem zu früh deaktiviert würde, um den ordnungsgemäßen Einlauf der Fensterscheibe 1 in den oberen Dichtungsbereich sicherzustellen. Dadurch besteht die Gefahr, daß ein Körperteil zwischen der Oberkante der Fensterscheibe und dem Dichtungsbereich 4 eingeklemmt werden könnte, es also zu Verletzungen kommt, die durch ein Einklemmschutzsystem gerade ausgeschlossen werden sollen.

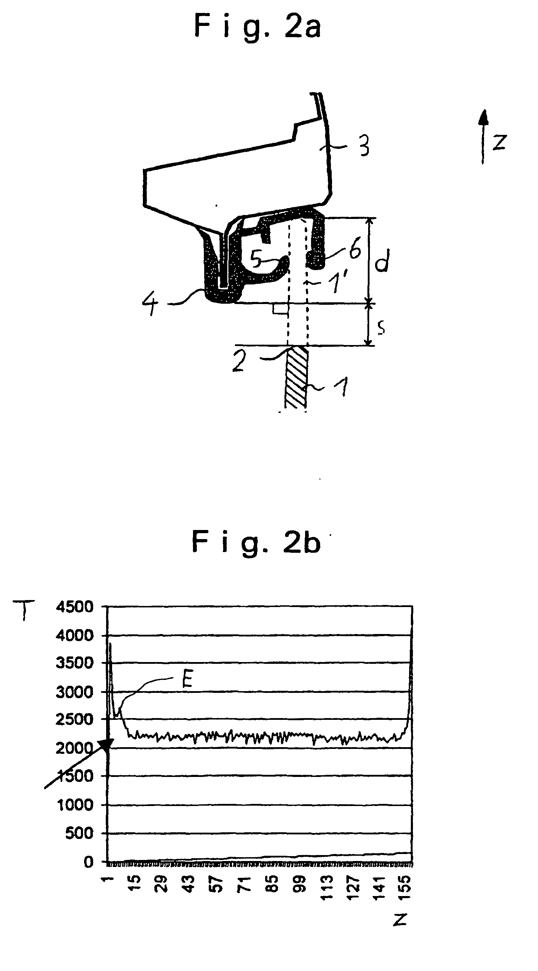

In Figur 2a ist die Oberkante 2 einer Fensterscheibe 1 dargestellt, die im Begriff ist, entlang ihrer Verstellrichtung z in den an der Fahrzeugkarosserie 3 befestigten oberen Dichtungsbereich 4 einzufahren. Die Fensterscheibe befindet sich hierbei in einem Abstand d + s von ihrer Schließposition, die der Ausdehnung d des Dichtungsbereiches 4 entlang der Verstellrichtung z der Fensterscheibe zuzüglich eines Abstandes s entspricht. Dieser Abstand s entspricht der kleinstmöglichen Ausdehnung eines Hindernisses entlang des Verstellweges z, das noch einen Einklemmfall verursachen kann, also beispielsweise der Dicke des Fingers eines Kleinkindes.

Wird diese Fensterscheibe 1 weiter entlang der Verstellrichtung z nach oben verfahren, so gelangt deren Oberkante 2 in den Dichtungsbereich 4, wobei beidseitig Dichtungslippen 5, 6 des Dichtungsbereiches 4 gegen die Seitenflächen der Fensterscheibe 1 drücken, wodurch die Verstellgeschwindigkeit der Fensterscheibe verringert wird, bis sie schließlich ihre obere Endposition (Schließposition) erreicht hat, die in Figur 2a gestrichelt dargestellt und mit dem Bezugszeichen 1' versehen ist.

Messungen haben nun ergeben, daß es beim Einlauf der Oberkante 2 der Fensterscheibe 1 in den Dichtungsbereich 4 nicht zu einem kontinuierlichen Abfall der Geschwindigkeit der Fensterscheibe kommt. Vielmehr wird zunächst ein charakteristischer Abfall der Verstellgeschwindigkeit der Fensterscheibe 1 und damit auch der Geschwindigkeit des Antriebsmotors des Fensterhebers beobachtet, wenn die Oberkante 2 der Fensterscheibe 1 die Dichtlippen 5, 6 erreicht. Nachdem der Widerstand dieser Dichtlippen 5, 6 überwunden ist, nimmt dann die Geschwindigkeit der Fensterscheibe noch einmal kurzzeitig zu, bis sie beim Erreichen ihrer Schließposition vollständig abgebremst wird.

Dieses charakteristische Verhalten der Fensterscheibe beim Einlauf in die Scheibendichtung ist in der Figur 2b gezeigt, in der die Periodendauer des Antriebs über dem Verstellort der Fensterscheibe dargestellt ist. Dabei ist der Verstellort z der Fensterscheibe derart definiert, daß die Variable z umso größer ist, je weiter die Oberkante 2 der Fensterscheibe 1 von der oberen Endposition (Schließposition) der Fensterscheibe 1 entfernt ist. Es ist deutlich erkennbar, daß sich beim Einlaufen der Fensterscheibe in den Dichtungsbereich ein Exremum E (auf welches in Figur 2b zusätzlich mit einem Pfeil hingewiesen wird) im Verlauf der Periodendauer T des Antriebs über dem Verstellort z der Fensterscheibe ausbildet. Anhand dieses Extremum E kann festgestellt werden, daß die Fensterscheibe 1 tatsächlich in den Dichtungsbereich 4 eingelaufen ist. Alternativ könnte hierzu aber auch eine charakteristische Steigung der Periodendauer T unmittelbar vor dem Erreichen des Extremums E herangezogen werden.

Selbstverständlich kann anstelle der Periodendauer T auch die Geschwindigkeit über dem Verstellort z aufgetragen werden. In diesem Fall würde sich anstelle eines lokalen Maximums (wie es in Figur 2b erkennbar ist), ein lokales Minimum im Verlauf der Geschwindigkeit über dem Verstellort z ausbilden. Entsprechend käme es zu einem charakteristischen Abfall der Geschwindigkeit vor dem Erreichen des lokalen Minimums.

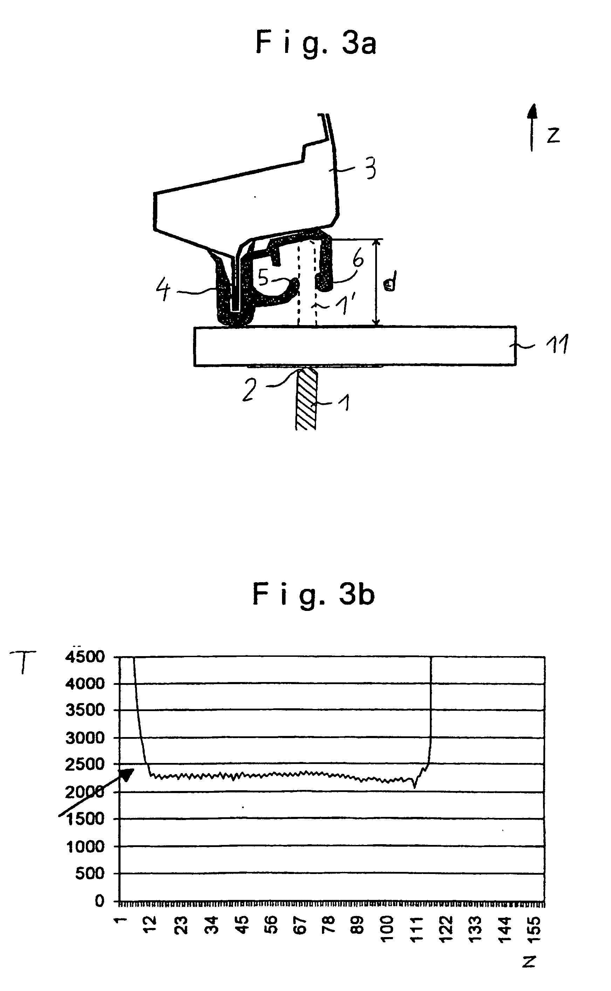

In Figur 3a ist der Fall dargestellt, in dem die Oberkante 2 der Fensterscheibe 1 vor dem Erreichen der an der Fahrzeugkarosserie 3 befestigten Scheibendichtung 4 und insbesondere von deren Dichtlippen 5, 6 auf ein Hindernis 11 aufgelaufen ist. In diesem Fall kann also die Fensterscheibe 1 ihre in Figur 3a gestrichelt dargestellte und mit den Bezugszeichen 1' versehene Schließposition nicht erreichen.

Figur 3b, in der wiederum die Periodendauer T des Antriebs über dem Verstellort z der Fensterscheibe aufgetragen ist, zeigt, daß in diesem Fall die Änderung der Periodendauer T einen ganz anderen Verlauf nimmt als bei dem in den Figuren 2a und 2b dargestellten ordnungsgemäßen Einlaufen der Fensterscheibe in den oberen Dichtungsbereich.

In Figur 3b ist insbesondere erkennbar, daß das Anfahren der Oberkante 2 der Fensterscheibe 1 gegen das Hindernis 11 zu einem kontinuierlichen, steilen Anstieg der Periodendauer T (in Figur 3b durch einen Pfeil besonders gekennzeichnet) führt. Ein lokales Extremum der Periodendauer T bildet sich hierbei nicht aus, und auch die Art des Anstiegs der Periodendauer T ist ganz anders ausgebildet als bei dem Einlauf in den oberen Dichtungsbereich. Durch die Auswertung der Periodendauer T des Antriebs der Fensterscheibe läßt sich somit zuverlässig feststellen, ob die Fensterscheibe bei der Normierung ihrer Scheibenposition tatsächlich ihre Schließposition in dem oberen Dichtungsbereich erreicht hat oder ob sie beim Normieren gegen ein Hindernis gefahren ist. Im letzteren Fall wird die Normierung als nicht erfolgreich abgebrochen. Ein automatisches Anheben der Fensterscheibe (z.B. mittels einer einzigen Betätigung eines entsprechenden Bedienelementes des Fensterhebers) wird dann durch eine entsprechende Programmierung der Steuerelektronik des Fensterhebers verhindert. Erst wenn eine erfolgreiche Normierung der Scheibenposition durchgeführt worden ist, wird durch die Steuerelektronik das automatische Anheben der Fensterscheibe ermöglicht.

Hinsichtlich der Bedeutung dieser Überwachung der Normierung der Scheibenposition für das zuverlässige Funktionieren eines Einklemmschutzsystems wird zur Vermeidung von Wiederholungen auf die diesbezüglichen Ausführungen bei der einleitenden Erörterung der Patentansprüche verwiesen.

## Patentansprüche

1. Verfahren zum Normieren der Scheibenposition eines fremdkraftbetätigten Kraftfahrzeugfensterhebers, wobei
- die Fensterscheibe mittels des Antriebs des Fensterhebers in eine mit einem Dichtungsbereich versehene Schließposition gefahren wird und .
- diese Schließposition zur Normierung der Scheibenposition verwendet wird,
**dadurch gekennzeichnet,**
**daß** zur Prüfung, ob die Fensterscheibe (1) ihre Schließposition erreicht hat, die Änderung einer mit der Dynamik der Fensterscheibe (1) korrelierten Größe (T) beim Einlaufen der Fensterscheibe (1) in den der Schließposition zugeordneten Dichtungsbereich (4) ausgewertet wird.

2. Verfahren nach Anspruch 1, **dadurch gekennzeichnet, daß** die Änderung der Periodendauer (T) oder der Geschwindigkeit (1/T) des Antriebs oder eines durch den Antrieb bewegbaren Bauelementes beim Einlauf der Fensterscheibe (1) in den Dichtungsbereich (4) ausgewertet wird.

3. Verfahren nach Anspruch 2, **dadurch gekennzeichnet, daß** der Einlauf der Fensterscheibe (1) in den Dichtungsbereich (4) anhand eines lokalen Extremums (E) einer mit der Dynamik der der Fensterscheibe (1) korrelierten Größe (T; 1/T) in Abhängigkeit von dem Verstellort (z) der Fensterscheibe (1) ermittelt wird.

4. Verfahren nach Anspruch 3, **dadurch gekennzeichnet, daß** der Einlauf der Fensterscheibe (1) in den Dichtungsbereich (4) anhand eines lokalen Extremums (E) der Periodendauer (T) oder der Geschwindigkeit (1/T) in Abhängigkeit von dem Verstellort (z) der Fensterscheibe (1) ermittelt wird.

5. Verfahren nach Anspruch 2, **dadurch gekennzeichnet, daß** der Einlauf der Fensterscheibe (1) in den Dichtungsbereich (4) anhand einer charakteristischen Steigung einer mit der Dynamik der der Fensterscheibe (1) korrelierten Größe (T; 1/T) ermittelt wird.

6. Verfahren nach Anspruch 5, **dadurch gekennzeichnet, daß** der Einlauf der Fensterscheibe (1) in den Dichtungsbereich (4) anhand einer charakteristischen Zunahme der Periodendauer (T) oder eines charakteristischen Abfalls der Geschwindigkeit (1/T) ermittelt wird.

7. Verfahren nach einem der vorhergehenden Ansprüche, **dadurch gekennzeichnet, daß** die Normierung der Scheibenposition abgebrochen wird, wenn nach einem vorgebbaren Zeitraum kein für den Einlauf der Fensterscheibe (1) in den Dichtungsbereich (4) charakteristischer Verlauf der mit der Dynamik der Fensterscheibe (1) korrelierten Größe (T) beobachtet wird.

8. Verfahren nach einem der vorhergehenden Ansprüche, **dadurch gekennzeichnet, daß** die Normierung der Scheibenposition nur dann durchgeführt wird, wenn sich die Fensterscheibe (1) mindestens entlang einer Wegstrecke bewegt hat, die größer ist als die Ausdehnung (d) des Dichtungsbereiches (4) entlang der Bewegungsrichtung der Fensterscheibe (1).

9. Verfahren nach Anspruch 8, **dadurch gekennzeichnet, daß** die Normierung der Scheibenposition nur dann durchgeführt wird, wenn sich die Fensterscheibe (1) mindestens entlang einer Wegstrecke bewegt hat, die größer ist als die Ausdehnung (d) des Dichtungsbereiches (4) entlang der Bewegungsrichtung der Fensterscheibe (1) zuzüglich des Weges der zum Erreichen der angestrebten Verstellgeschwindigkeit der Fensterscheibe (1) benötigt wird.

## Claims

1. Method for calibrating the window pane position of a vehicle window lifter operated by remote force whereby
- the window pane is moved by means of the drive of the window lifter into a closed position provided with a sealing region, and
- this closed position is used for calibrating the window pane position,
**characterised in that**
in order to check whether the window pane (1) has reached its closed position the change in a value (Y) correlated with the dynamics of the window pane (1) as the window pane (1) runs into the sealing region (4) associated with the closed position is evaluated.

2. Method according to claim 1, **characterised in that** the change in the period duration (T) or speed (1/T) of the drive or of a structural element movable through the drive when the window pane (1) runs into the sealing region (4) is evaluated.

3. Method according to claim 2, **characterised in that** the entrance of the window pane (1) into the sealing region (4) is determined from a local extremum (E) of a value (T; 1/T) correlated with the dynamics of the window pane (1) in dependence on the adjustment site (z) of the window pane (1).

4. Method according to claim 3, **characterised in that** the entrance of the window pane (1) into the sealing region (4) is determined from a local extremum (E) of the period duration (T) or the speed (1/T) in dependence on the adjustment site (z) of the window pane (1).

5. Method according to claim 2, **characterised in that** the entrance of the window pane (1) into the sealing region (4) is determined from a characteristic rise of a value (T; 1/T) correlated with the dynamics of the window pane (1).

6. Method according to claim 5, **characterised in that** the entrance of the window pane (1) into the sealing region (4) is determined from a characteristic increase in the period duration (T) or a characteristic drop in the speed (1/T).

7. Method according to one of the preceding claims, **characterised in that** the calibration of the window pane position is interrupted when after a predeterminable time interval no path of the value (T) correlated with the dynamics of the window pane (1) which is characteristic for the entrance of the window pane (1) into the sealing region (4) has been observed.

8. Method according to one of the preceding claims **characterised in that**, the calibration of the window pane position is only then carried out when the window pane (1) has moved at least along a path stretch which is greater than the extension (d) of the sealing region (4) along the direction of movement of the window pane (1).

9. Method according to claim 8, **characterised in that** the calibration of the window pane position is only then carried out when the window pane (1) has moved at least along a path stretch which is greater than the extension (d) of the sealing region (4) along the direction of movement of the window pane (1) including the path which is required for reaching the targeted adjusting speed of the window pane (1).

## Revendications

1. Procédé pour normaliser la position de la vitre d'un lève-vitre de véhicule automobile, actionné par une force externe, dans lequel :
- la vitre de fenêtre est déplacée dans une position de fermeture munie d'une zone d'étanchéité, au moyen de l'entraînement du lève-vitre ; et
- cette position de fermeture est utilisée pour normaliser la position de la vitre,
**caractérisé en ce que**, pour vérifier si la vitre de fenêtre (1) a atteint sa position de fermeture, la modification d'une grandeur (T) en corrélation avec la dynamique de la vitre de fenêtre (1) est évaluée lorsque la vitre de fenêtre (1) pénètre dans la zone d'étanchéité (4) associée à la position de fermeture.

2. Procédé selon la revendication 1, **caractérisé en ce que** la modification de la durée de période (T) ou de la vitesse (1/T) de l'entraînement ou d'un élément de construction susceptible de se déplacer via l'entraînement, est évaluée lorsque la vitre de fenêtre (1) pénètre dans la zone d'étanchéité (4).

3. Procédé selon la revendication 2, **caractérisé en ce que** la pénétration de la vitre de fenêtre (1) dans la zone d'étanchéité (4) est déterminée selon un sommet local (E) d'une grandeur (T, 1/T) en corrélation avec la dynamique de la vitre de fenêtre (1), en dépendance de l'emplacement de décalage (z) de la vitre de fenêtre (1).

4. Procédé selon la revendication 3, **caractérisé en ce que** la pénétration dé la vitre de fenêtre (1) dans la zone d'étanchéité (4) est déterminée selon un sommet local (E) de la durée de période (T) ou de la vitesse (1/T), en dépendance de l'emplacement de décalage (z) de la vitre de fenêtre (1).

5. Procédé selon la revendication 2, **caractérisé en ce que** la pénétration de la vitre de fenêtre (1) dans la zone d'étanchéité (4) est déterminée selon une pente ascendante caractéristique d'une grandeur (T, 1/T) en corrélation avec la dynamique de la vitre de fenêtre (1).

6. Procédé selon la revendication 5, **caractérisé en ce que** la pénétration de la vitre de fenêtre (1) dans la zone d'étanchéité (4) est déterminée selon une augmentation caractéristique de la durée de période (T) ou selon une chute caractéristique de la vitesse (1/T).

7. Procédé selon l'une des revendications précédentes, **caractérisé en ce que** la normalisation de la position de la vitre est abandonnée si après un intervalle de temps prédéterminé aucune évolution, caractéristique pour la pénétration de la vitre de fenêtre (1) dans la zone d'étanchéité (4), n'est observée pour la grandeur (T) en corrélation avec la dynamique de la vitre de fenêtre (1).

8. Procédé selon l'une des revendications précédentes, **caractérisé en ce que** la normalisation de la position de la vitre est exécutée seulement si la vitre de fenêtre (1) s'est déplacée au moins le long d'une distance qui est supérieure à l'extension (d) de la zone d'étanchéité (4), le long de la direction de déplacement de la vitre de fenêtre (1).

9. Procédé selon la revendication 8, **caractérisé en ce que** la normalisation de la position de la vitre est exécutée seulement si la vitre de fenêtre (1) s'est déplacée au moins le long d'une distance qui est supérieure à l'extension (d) de la zone d'étanchéité (4) le long de la direction de déplacement de la vitre de fenêtre (1), addition faite du trajet qui est nécessaire pour atteindre la vitesse de décalage visée de la vitre de fenêtre (1).
